# EUROPÄISCHE PATENTSCHRIFT

(11) **EP 2 694 840 B1**
(45) Veröffentlichungstag und Bekanntmachung des Hinweises auf die Patenterteilung: **24.06.2015**
(21) Anmeldenummer: 12713106.8
(22) Anmeldetag: 29.03.2012
(51) Int. Cl.: F16G 13/16

(54) **ENERGIEFÜHRUNGSKETTE**
CABLE DRAG CHAIN
CHAÎNE D'ACHEMINEMENT D'ÉNERGIE

(30) Priorität: 04.04.2011 DE 202011004762 U
(43) Veröffentlichungstag der Anmeldung: 12.02.2014
(73) Patentinhaber: Igus GmbH, 51147 Köln (DE)
(72) Erfinder: BLASE, Günter, 51429 Bergisch Gladbach (DE); HERMEY, Andreas, 53773 Hennef (DE)
(74) Vertreter: Lippert, Stachow & Partner
(86) Internationale Anmeldenummer: PCT/EP2012/055717
(87) Internationale Veröffentlichungsnummer: WO 2012/136573

(56) Entgegenhaltungen:
- WO-A1-98/31950
- DE-A1- 19 919 076
- DE-A1-102005 061 775
- DE-A1-102008 015 954
- DE-C1- 3 714 056
- DE-U1-202008 008 358

## Beschreibung

Die Erfindung betrifft eine Energieführungskette zur Führung von Kabeln, Schläuchen oder dergleichen von einer ersten Anschlussstelle zu einer zweiten Anschlussstelle, wobei mindestens eine der beiden Anschlussstellen ortsveränderlich ist, bestehend aus einer Vielzahl gelenkig miteinander verbundener bzw. verbindbarer Kettenglieder aus Kunststoff, die jeweils zwei Seitenlaschen aufweisen, wobei die Seitenlaschen quer zu ihrer Längsrichtung gegenüberliegende Laschenstränge bilden und mindestens einige der gegenüberliegenden Seitenlaschen durch obere und untere Querstege miteinander verbunden sind, wobei wenigstens einige der Querstege an mindestens einem ihrer Enden einen in Längsrichtung des Querstegs erstreckenden Ansatz aufweisen, an den zwei zu diesen auf einer gemeinsamen Achse liegende zylindrische Lagerbereiche angeordnet sind, die jeweils in eine an der zu dem genannten Ende des Querstegs weisenden Seitenlasche angeordnete taschenförmige Lageraufnahme einsetzbar sind, und die Seitenlasche eine Schnappeinrichtung mit einer Schnappnase aufweist, die mit einer an dem genannten Ende des Querstegs angeordneten Rastleiste zusammenwirkt, so dass in einer Rastposition die Schnappnase die Rastleiste übergreift, wobei die Rastleiste radial außerhalb der gemeinsamen Achse der Lagerbereiche vom Quersteg wegweisend angeordnet ist und die Schnappeinrichtung in der Rastposition an der vom Quersteg wegweisenden Seite der Rastleiste angeordnet ist, so dass beim Verschwenken des Querstegs um die gemeinsame Achse der in die Lageraufnahmen eingesetzten Lagerbereiche bis in eine vollständig geöffnete Position des Querstegs die Rastleiste unterhalb der Schnappnase hinweg bewegbar ist.

Eine derartige Energieführungskette ist aus der DE 10 2005 061 775 A1 bekannt. Die Seitenlaschen dieser Energieführungskette weisen an ihren oberen Schmalseiten taschenförmige Lageraufnahmen auf, in die an den beiden Enden der oberen Querstege angeformte Lagerbereiche eingreifen.

Energieführungsketten werden häufig so angeordnet, dass sie ein unteres Trum, das über eine erste Anschlussstelle stationär mit einer Basis verbunden ist, und ein oberes Trum bilden, das über eine zweite Anschlussstelle mit einem beweglichen Mitnehmer verbunden ist, bildet, wobei beide Trume über einen Umlenkbereich miteinander verbunden sind. Bei längeren Energieführungsketten kann es wünschenswert sein, dass das oberen Trum auf dem unteren Trum beim Hin- und Herfahren der Kette gleitet. Dazu sind an den jeweils zum gegenüberliegenden Trum weisenden Schmalseiten der Seitenlaschen Gleitflächen ausgebildet. Gleiten bei der aus der DE 10 2005 061 775 A1 bekannten Energieführungskette die mit den Lageraufnahmen versehenen Schmalseiten der Seitenlaschen aufeinander, wird die Gleitfähigkeit durch die in den Schmalseiten eingelassenen Lageraufnahmen, die Unterbrechungen der Gleitflächen bilden, beeinträchtigt. Insbesondere, wenn die Seitenlaschen relativ schlank ausgebildet werden sollen, sind die in die Schmalseiten der betreffenden Kette eingelassenen Lageraufnahmen für ein Gleiten des Obertrums auf dem Untertrum nachteilig.

Bei der aus der DE 199 19 076 A bekannten Kette weist das Ende des mit der angrenzenden Seitenlasche verschwenkbar befestigbaren Querstegs zwei sich in Längsrichtung des Querstegs erstreckende Ansätze auf, die mit quer zu diesen liegenden Lagerzapfen versehen sind. Die Seitenlaschen weisen zwei parallele Schlitze, in die die Ansätze des Querstegs eingreifen sowie sich von den Schlitzen in Längsrichtung der Kette erstreckende Lageraufnahmen auf, die mit Hinterschneidungen vorgesehen sind, so dass die Lagerzapfen in die Lageraufnahmen einrastbar sind. Weiterhin weist die Seitenlasche an der zum Ketteninneren weisenden Seite der Lageraufnahmen eine Schnappverbindung mit einer zum Ketteninneren weisenden Schnappnase auf, die in der Rastposition eine am Querstegsende zwischen den Ansätzen angeordnete Rastleiste übergreift.

Sollen bei den oben genannten Energieführungsketten nicht nur die oberen sondern auch die unteren Querstege in der bekannten Art verschwenkbar mit den Seitenlaschen verbunden werden, ergibt sich eine Instabilität des gewünschten rechteckigen Querschnitts von Seitenlaschen und Querstegen, da lediglich die Rastleisten der Querstege an den Schnappnasen der Seitenlaschen anliegen und bei seitlichen Kräften die Seitenlaschen und Querstege leicht in eine Parallelogramm-Stellung kippen können.

DE 3 714 056 C1 offenbart alle Merkmale des Oberbegriffs des Anspruchs 1.

Der Erfindung liegt die Aufgabe zugrunde, eine Energieführungskette der eingangs genannten Art zur Verfügung zu stellen, deren Seitenlaschen möglichst schlank ausgebildet sind und ein einwandfreies Gleiten des Obertrums auf dem Untertrum gewährleisten, wobei sowohl die unteren als auch die oberen Querstege an ihren beiden Enden verschwenkbar mit den angrenzenden Seitenlaschen verbunden sind, ohne die Stabilität der Kette gegenüber quer gerichteten Kippkräften zu beeinträchtigen.

Die Aufgabe wird erfindungsgemäß dadurch gelöst, dass bei einer Energieführungskette der eingangs genannten Art sowohl die oberen als auch die unteren Querstege an ihren beiden Enden mit dem Ansatz, den Lagerbereichen und der Rastleiste versehen sind und die Seitenlaschen die die Lagerbereiche aufnehmenden Lageraufnahmen und Schnappeinrichtungen für die Rastleisten aufweisen, die Lageraufnahmen an den zum Ketteninneren weisenden Seiten der Seitenlaschen vorstehen und die Querstege an ihren beiden Enden in axialer Richtung außerhalb der Lagerbereiche jeweils einen sich in Längsrichtung des Querstegs erstreckenden Vorsprung aufweisen, der mit einer Anlagefläche an der zum Ketteninneren weisenden Seite einer Seitenlasche in der Rastposition anliegt.

Durch die erfindungsgemäßen Maßnahmen wird einerseits erreicht, dass die Breite der Seitenlaschen relativ gering gehalten werden kann, da die Lageraufnahmen an der zum Ketteninneren weisenden Seite der Seitenlaschen angeordnet sind und der Abstand zwischen der Schnappeinrichtung und der Lageraufnahme quer zur Längseinrichtung der Kette auf ein Minimum reduzierbar ist. Die Breite der Seitenlaschen kann daher so bemessen sein, dass sie im Wesentlichen nur durch die Stabilitätsanforderungen an die Seitenlaschen bestimmt ist.

Weiterhin kann die im Bereich des Querstegs liegende Schmalseite der Seitenlaschen eine im Bereich des Befestigungsteils zur schwenkbaren Befestigung des Querstegs durchgehende Fläche aufweisen, auf der in einem gegenüberliegenden Trum der Energieführungskette angeordnete Seitenlaschen gleiten oder, sofern zumindest einige dieser Seitenlaschen mit Rollen ausgebildet sind, abrollen können.

Erfindungsgemäß stehen die taschenförmigen Lageraufnahmen an der zum Ketteninneren weisenden Seite der Seitenlasche vor. Die zur Aufnahme der Schnappeinrichtung dienende Ausnehmung in der Seitenlasche kann bei dieser Ausführung in dem zum Ketteninneren weisenden Randbereich der Seitenlasche angeordnet sein. Dadurch kann die im Bereich des Querstegs verlaufende Schmalfläche der Seitenlasche einen relativ breiten durchgehenden Bereich zwischen der Ausnehmung und der Außenseite der Seitenlasche aufweisen. Die Breite dieses Bereichs kann größer oder gleich der halben Breite der Kettenlasche sein. Der Bereich kann insbesondere mit der Schmalseite der Kettenlasche eine durchgehende Gleitfläche für eine darauf gleitende Seitenlasche eines gegenüberliegenden Trums bilden, bzw., wenn Seitenlaschen an der betreffenden Schmalseite mit Rollen ausgebildet sind, eine durchgehende Rollfläche für das Abrollen von Seitenlaschen eines darüber liegenden Trums bilden.

Gemäß einem weiteren Merkmal der Erfindung weist das mit den Lagerbereichen versehenen Ende des Querstegs in axialer Richtung außerhalb der Lagerbereiche jeweils einen sich in Längsrichtung des Querstegs erstreckenden Vorsprung auf, der mit einer Anlagefläche an der zum Ketteninneren weisenden Seite einer Seitenlasche anliegen kann. Durch die an der zum Ketteninneren weisenden Seite der Seitenlaschen anliegenden Anlageflächen der Querstege wird die oben angesprochene mögliche Instabilität des rechteckigen Querschnitts von Seitenlaschen und mit diesen gelenkig verbundenen oberen und unteren Querstegen vermieden. Bei seitlich auf die Kettenglieder einwirkenden Kräften vermeiden die Anlagenflächen ein Kippen der Seitenlaschen und Querstege in eine Parallelogramm-Stellung.

Da die am betreffenden Ende des Querstegs angeordnete Rastleiste beim Verschwenken des Querstegs bis in seine vollständig geöffnete Position unterhalb der Schnappnase der Schnappeinrichtung der Seitenlasche hinweg bewegbar ist, kann der Quersteg nach Lösen von der gegenüberliegenden Seitenlasche bis in seine vollständig geöffnete Position verschwenkt werden, ohne dass die Rastleiste - wie bei dem oben genannten Stand der Technik - über die Schnappnase gedrückt werden muss. Daher wird der Verschleiß der Schnappeinrichtung an der Seitenlasche und Rastleiste am Quersteg vermindert.

In einer bevorzugten Ausführung der Erfindung ist die Rastleiste zwischen den Lagerbereichen des Querstegs angeordnet. Die Schnappeinrichtung der Seitenlasche mit der Schnappnase kann insbesondere in diesem Falle zwischen den Lageraufnahmen für die Lagerbereiche der Querstege angeordnet sein.

In einer Weiterbildung der Erfindung kann die Rastleiste eine oder mehrere ebene Flächen aufweisen, an denen die Schnappnase in der Rastposition anliegt. Die ebene Fläche bzw. die ebenen Flächen der Rastleiste verlaufen vorzugsweise im Wesentlichen.parallel zur Querstegsebene. Sie können gegebenenfalls auch in einem Winkel zu dieser angeordnet sein.

Die in Längsrichtung der Kette liegenden Endbereiche der Rastleiste sind vorzugsweise an den aufeinander zu weisenden Stirnseiten der Lagerbereiche angeformt.

In einer bevorzugten Weiterbildung der Erfindung ist die Rastleiste in Bezug auf die zur Querstegsebene senkrechte, sich vom Ketteninnenraum auswärts erstreckenden Höhe der Lagerbereiche tiefer liegend angeordnet.

Die ebene Fläche bzw. die ebenen Flächen der Rastleiste erstrecken sich vorzugsweise in vom Quersteg weg weisender Richtung bis zum Umfang der Lagerbereiche. Je nach Anordnung der Rastleiste in Bezug auf die gemeinsame Achse der Lagerbereiche kann es jedoch auch zweckmäßig sein, dass das Ende der Rastleiste sich über den Umfang der Lagerbereiche hinaus erstreckt oder sich nicht bis zum Umfang der Lagerbereiche erstreckt.

An das zum Quersteg gerichtete Ende der Rastleiste kann sich ein um die gemeinsame Achse der Lagerbereiche konvex gekrümmter Bereich anschließen. Dieser kann insbesondere mit dem Ansatz am Querstegsende verbunden sein.

Der radiale Abstand des konvex gekrümmten Bereichs von der gemeinsamen Achse der Lagerbereiche muss geringer sein als der radiale Abstand zwischen der zum Quersteg weisenden Kante der Schnappnase und der gemeinsamen Achse der Lagerbereiche in der Rastposition des Querstegs.

Bevorzugt erstreckt sich der konvex gekrümmte Bereich über einen Winkel (dessen Scheitelpunkt auf der gemeinsamen Achse der Lagerbereiche liegt) von ≥ 90°, entsprechend dem Schwenkwinkel des Querstegs in seiner vollständig geöffnete Position.

Insbesondere kann der konvex gekrümmte Bereich zylinderförmig um die gemeinsame Achse der Lagerbereiche gekrümmt sein.

In Abhängigkeit von der Lage der zum Quersteg weisenden Kante der Schnappnase, der ebenen Fläche der Rastleiste und des konvex gekrümmten Bereichs in Bezug auf die gemeinsame Achse der Lagerbereiche in der Rastposition des Querstegs übergreift die Schnappnase den konvex gekrümmten Bereich beim Verschwenken des Querstegs oder nicht. Um ein Lösen der Schwenkverbindung beim Verschwenken des Querstegs zu verhindern oder um die Lagerbereiche zusätzlich in den Lageraufnahmen zu halten, kann vorgesehen sein, dass die Schnappnase mit einem geringen Spiel am konvex gekrümmten Bereich beim Verschwenken des Querstegs anliegt.

In einer bevorzugten Ausführung sind die Lageraufnahmen mit Hinterschneidungen versehen, in die die Lagerbereiche einrastbar sind, so dass auch beim Verschwenken des Querstegs die Lagerbereiche in den Lageraufnahmen gehalten werden.

Die an die ebene Fläche bzw. ebenen Flächen der Rastleiste anschließenden konvex gekrümmten Bereiche können mit einer sich in Längsrichtung der Kette erstreckenden Nut versehen sein, in die die Schnappnase beim vollständigen Öffnen des Querstegs zur Arretierung des Querstegs in der vollständig geöffneten Position einrastet.

In einer bevorzugten Weiterbildung der Erfindung weist die Rastleiste einen gegenüber ihren in Kettenlängsrichtung liegenden äußeren Bereichen tiefer gelegenen mittleren Bereich auf.

Dieser tiefer liegende Bereich kann so ausgebildet sein, dass er in der Rastposition des Querstegs mit einem Abstand unterhalb der Schnappnase der Schnappeinrichtung der Seitenlasche angeordnet ist.

In einer alternativen bevorzugten Ausführung weist die Schnappnase in ihrem mittleren, über dem tiefer liegenden Bereich der Rastleiste liegenden Bereich einen tiefer gezogenen Vorsprung auf, der in der Rastposition des Querstegs an dem tiefer liegenden Bereich der Rastleiste anliegt. Somit kann die Rastleiste über ihre gesamte Länge in Längsrichtung der Kette mit der Schnappnase der Schnappeinrichtung der Seitenlasche bei Ausbildung eines tiefer liegenden Bereichs der Rastleiste zusammenwirken.

Der tiefer liegende Bereich der Rastleiste hat den Vorteil, dass der Schnappnase von außen mit einem Werkzeug, das über den Quersteg in den tiefer liegenden Bereich gegen den Schnapphaken drückt, aus seiner Rastposition mit der Rastleiste leicht gelöst werden kann.

Bei einer bevorzugten Weiterbildung der Erfindung ist die zur Seitenlasche hin weisende Seite der Rastleiste mit einer zum Ketteninneren hin verlaufenden Gleitschräge versehen, die mit der Schnappnase derart zusammenwirkt, dass diese beim Einsetzen der Lagerbereiche des Querstegs in die Lageraufnahmen - bei im Wesentlichen senkrechter Positionierung des Querstegs zur Seitenlasche - in der Seitenlasche nach außen gedrückt wird.

Die Schnappeinrichtung der Seitenlasche kann als elastisch biegsamer Schnapphaken ausgebildet sein, der in einer zur benachbarten Schmalseite der Seitenlasche und zum Ketteninneren offenen Ausnehmung angeordnet ist. Der Schnapphaken kann andererseits auch über seitliche Torsionselemente mit dem in Längsrichtung der Kette liegenden Seitenwänden der Ausnehmung verbunden sein, so dass er durch die Torsionselemente in einer Ebene senkrecht zur Kettenlängsrichtung verschwenkbar ist.

Bei einer solchen Ausbildung der Schnappeinrichtung als Schnapphaken liegt die zur Seitenlasche hin weisende Gleitschräge bevorzugt an der Innenseite des Schnapphakens unterhalb der Schnappnase an.

Gemäß einer vorteilhaften Weiterbildung der Erfindung sind die taschenförmigen Lageraufnahmen mit einer teilzylindrischen Öffnung ausgebildet, deren Radius etwa dem Radius der Lagerbereiche des Querstegs entspricht und die zur Außenseite des Querstegs und an den aufeinander zu weisenden Stirnseiten offen sind. Die teilzylindrische Öffnung kann an der zum Quersteg weisenden Wand der taschenförmigen Lageraufnahme einen Hinterschnitt bilden, in die Lagerbereiche beim Schließen des Querstegs einrastbar sind.

Die Seitenlaschen einer Energieführungskette gemäß der Erfindung können gekröpft ausgebildet sein mit einem gegenüber einem mittleren Bereich nach außen gekröpften ersten Gelenkbereich und einem nach innen gekröpften zweiten Gelenkbereich. Der nach außen gekröpfte Gelenkbereich einer Lasche überlappt den nach innen gekröpften zweiten Gelenkbereich einer zu dieser Seite hin benachbarten Lasche und der nach innen gekröpfte Gelenkbereich zweite der Seitenlasche überlappt den nach außen gekröpften ersten Gelenkbereich der zu der anderen Seite benachbarten Lasche.

Die sich in Längsrichtung des Querstegs an beiden Seiten des Ansatzes erstreckenden Vorsprünge können so angeordnet und ausgebildet sein, dass sie zumindest teilweise mit ihrer Anlagefläche an dem den nach außen gekröpften Gelenkbereich der mit dem Quersteg verbundenen Seitenlasche überlappenden nach innen gekröpften Gelenkbereich der benachbarten Lasche anliegen. Dadurch werden die überlappenden Gelenkbereiche aneinander gehalten.

Die Gelenkbereiche können zur gelenkigen Verbindung der benachbarten Seitenlaschen mit Gelenkzapfen in einem Gelenkbereich versehen sein, der in eine Gelenkausnehmung oder -öffnung im anderen Gelenkbereich der benachbarten Lasche eingreift.

In einer anderen Ausführung können die Laschenstränge einer Energieführungskette aus sich abwechselnden Innen- und Außenlaschen bestehen, wobei sich jeweils Innenlaschen und somit auch Außenlaschen der beiden Laschenstränge in Querrichtung der Energieführungskette gegenüberliegen. Die Außenlaschen weisen zum Ketteninneren hin vorstehende, eine Verdickung bildende Mittelbereiche auf, an die sich in Kettenlängsrichtung dünnere Gelenkbereiche anschließen. Diese Gelenkbereiche werden an ihren Innenseiten von Gelenkbereichen der' an beiden Seiten benachbarten Innenlaschen überlappt. Die Gelenkbereiche der Innenlaschen weisen ebenfalls eine geringere Breite als die verdickten Mittelbereiche der Innenlaschen auf, die so bemessen ist, dass ihre Innenseite mit der Innenseite der Mittelbereiche der Außenlaschen fluchten oder von ihnen geringfügig vorstehen.

Bei einer solchen Ausführung einer Energieführungskette können die sich an beiden Seiten der Lagerbereiche erstreckenden Vorsprünge des an einer Außenlasche befestigten Querstegs so angeordnet und ausgebildet sein, dass sie zumindest teilweise an den Gelenkbereichen der benachbarten Innenlaschen anliegen bzw. diese überlappen. Aufgrund der Überlappung durch die Vorsprünge der Querstege werden die Innenlaschen an den Außenlaschen gehalten und können sich nicht von diesen zum Ketteninneren hin lösen.

Diese Konstruktion hat weiterhin den Vorteil, dass auf Querstege zwischen gegenüberliegenden Innenlaschen verzichtet werden kann. Die Innenlaschen brauchen in diesem Fall nicht mit Befestigungseinrichtungen für Querstege versehen sein.

Es kann zweckmäßig sein, dass die sich seitlich von den Lagerbereichen erstreckenden Vorsprünge Verbreiterungen in Längsrichtung der Kette an den Querstegsenden bilden, um die Gelenkbereiche der benachbarten Innenlaschen zu überlappen.

Weiterhin können die Vorsprünge in ihren Endbereichen eine zum Ketteninneren hin gerichtete Kröpfung aufweisen, so dass beim Verschwenken des Querstegs in seine voll geöffnete, im Wesentlichen vertikale Position der ins Ketteninnere weisende Rand der Seitenlasche in die nach innen gekröpften Endbereiche der Ansätze des Querstegs eingreift und ein Verschwenken des Querstegs in diese Position nicht behindert. Die innenseitig zum gekröpften Endbereich liegende Seite der Vorsprünge kann als Anschlagfläche gegen eine gegenüberliegende Anschlagfläche der Seitenlasche zur Begrenzung des Verschwenkwinkels des Querstegs ausgebildet sein.

Ein bevorzugtes Ausführungsbeispiel der Erfindung wird im Folgenden anhand der Zeichnung näher beschrieben. In der Zeichnung zeigen:
- Fig. 1: eine perspektivische Ansicht eines Teils einer Energieführungskette,
- Fig. 2: eine perspektivische Ansicht einer als Außenlasche ausgebildeten Seitenlasche eines Kettenglieds,
- Fig. 3: eine Seitenansicht der in Figur 2 dargestellten Seitenlasche vom Kettenaußenraum her,
- Fig. 4: eine Seitenansicht der in Figur 2 dargestellten Lasche vom Ketteninnenraum her,
- Fig. 5: eine Draufsicht auf die obere Schmalseite der in Figur 2 dargestellten Seitenlasche,
- Fig. 6: eine stirnseitige Ansicht der in Figur 2 dargestellten Seitenlaschen,
- Fig. 7: eine vergrößerte Ansicht des Schnitts A - A in Figur 4,
- Fig. 8: eine vergrößerte Ansicht des Schnitts B - B in Figur 4,
- Figur 9: eine perspektivische Darstellung einer als Innenlasche ausgebildeten Seitenlasche eines Kettenglieds,
- Fig. 10: eine Seitenansicht der in Figur 9 gezeigten Seitenlasche vom Kettenaußenraum her,
- Fig. 11: eine Seitenansicht der in Figur 9 gezeigten Seitenlasche vom Ketteninnenraum her,
- Fig. 12: eine Draufsicht auf die obere Schmalseite der in Figur 9 gezeigten Seitenlasche,
- Fig.13: eine stirnseitige Ansicht der in Figur 9 gezeigten Seitenlasche,
- Fig. 14: eine perspektivische Darstellung eines Querstegs der Energieführungskette,
- Fig. 15: eine Draufsicht auf den in Figur 14 dargestellten Quersteg vom Kettenaußenraum her,
- Fig. 16: eine Draufsicht auf den in Figur 14 dargestellten Quersteg vom Ketteninnenraum her,
- Fig. 17: eine seitliche Ansicht des in Figur 14 dargestellten Querstegs in Kettenlängsrichtung,
- Fig. 18: eine vergrößerte Ansicht des Schnitts A - A in Figur 15 und
- Fig. 19: eine Teilansicht des Querschnitts A - A in Figur 1.

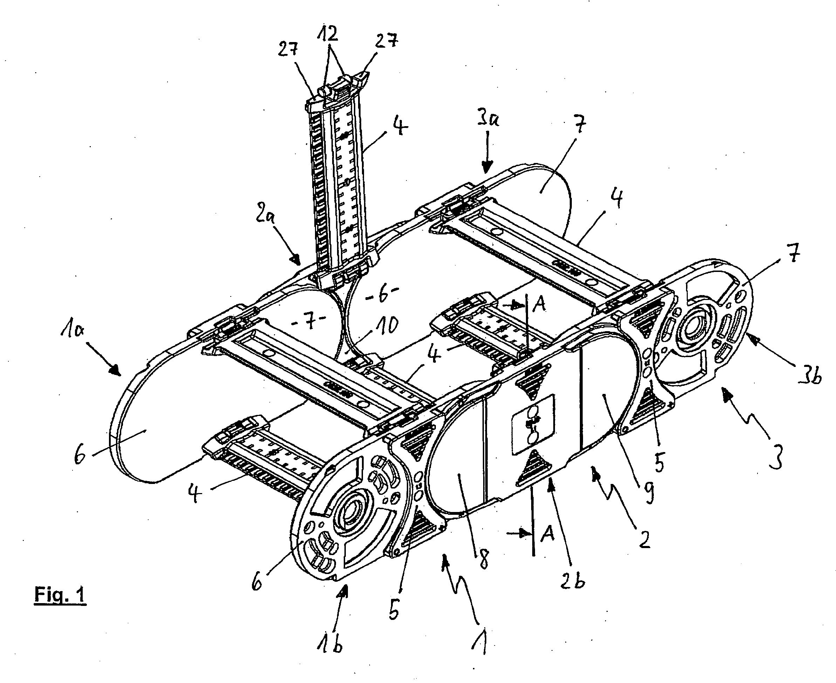

Der in Figur 1 gezeigte Abschnitt einer Energieführungskette besteht aus drei Kettengliedern 1, 2, 3, die jeweils zwei gegenüberliegende Seitenlaschen 1a, 1b, 2a, 2b bzw. 3a, 3b aufweisen. Die Seitenlaschen bilden quer zu ihrer Längsrichtung gegenüberliegende Laschenstränge. Wie weiterhin aus Figur 1 hervorgeht, sind die gegenüberliegenden Seitenlaschen durch obere und untere Querstege 4 miteinander verbunden.

Die Seitenlaschen 1a, 1b, 3a, 3b sind als Innenlaschen, die Seitenlaschen 2a, 2b als Außenlaschen ausgebildet. Die Innenlaschen weisen an ihrer Außenseite eine Verdickung bildende Mittelbereiche 5 auf, an die sich in Kettenlängsrichtung dünnere Gelenkbereiche 6 und 7 anschließen. Die Gelenkbereiche 6 und 7 werden an ihren Außenseiten von Gelenkbereichen 8 und 9 der benachbarten Außenlaschen überlappt, wobei Figur 1 nur die mittlere zwischen den beiden Innenlaschen angeordnete Außenlasche zeigt. Die Gelenkbereiche 8 und 9 der Außenlaschen weisen ebenfalls eine geringere Breite als die verdickten Mittelbereiche 5 der Innenlaschen auf, die so bemessen ist, dass ihre Außenseite mit der Außenseite der Mittelbereiche 5 der Innenlaschen im Wesentlichen fluchten. Die Außenlaschen weisen zum Ketteninneren vorstehende, ebenfalls eine Verdickung bildende Mittelbereiche 10 auf. Die Breite der Gelenkbereiche 6 und 7 der Innenlaschen und die Breite der Mittelbereiche 10 der Außenlaschen ist ebenfalls so bemessen, dass ihre Innenseiten im Wesentlichen miteinander fluchten.

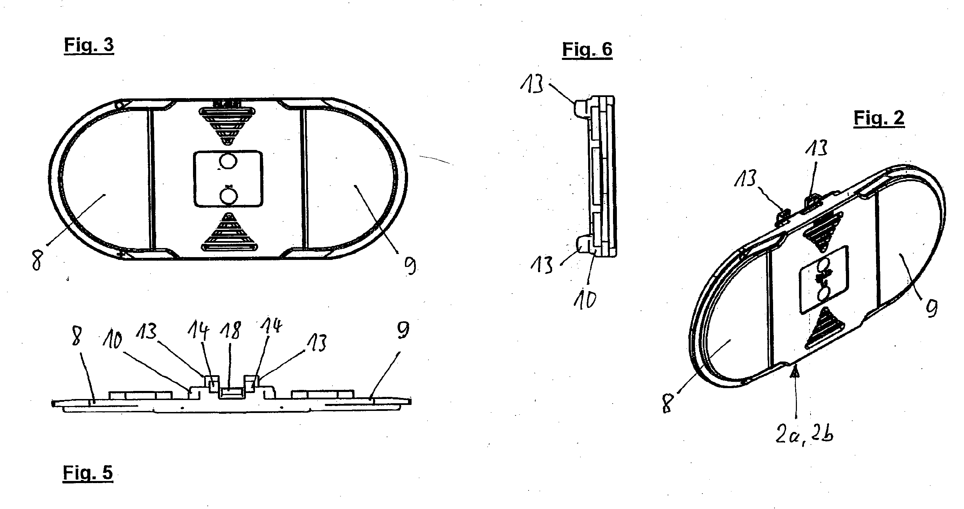

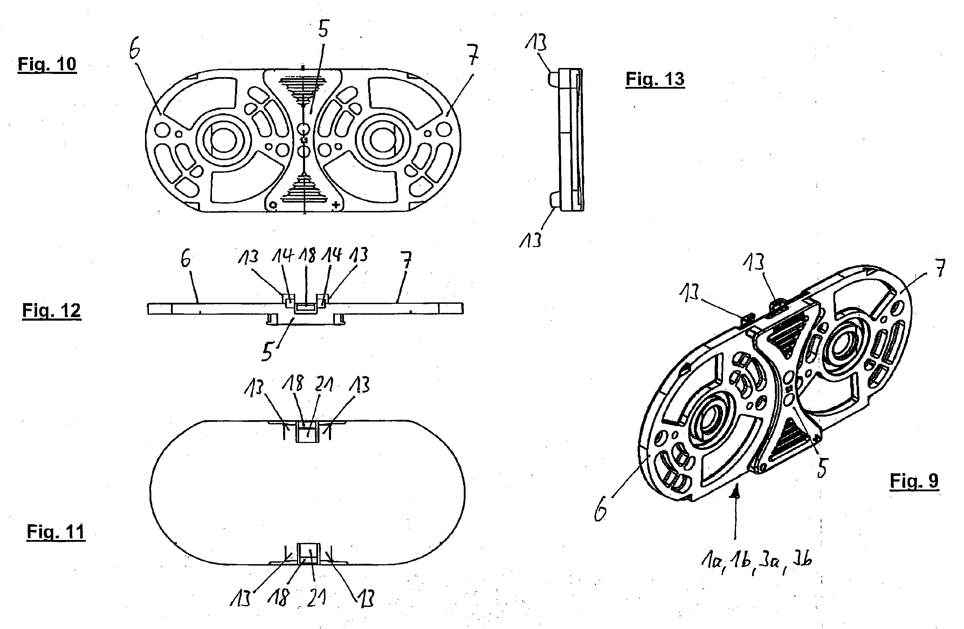

Die Innen- und Außenlaschen sind jeweils identisch, so dass sie in beiden Laschensträngen der Energieführungskette verwendet werden können. Eine Außenlasche ist genauer in den Figuren 2 - 8 dargestellt, während eine Innenlasche näher in den Figuren 9 - 13 gezeigt ist.

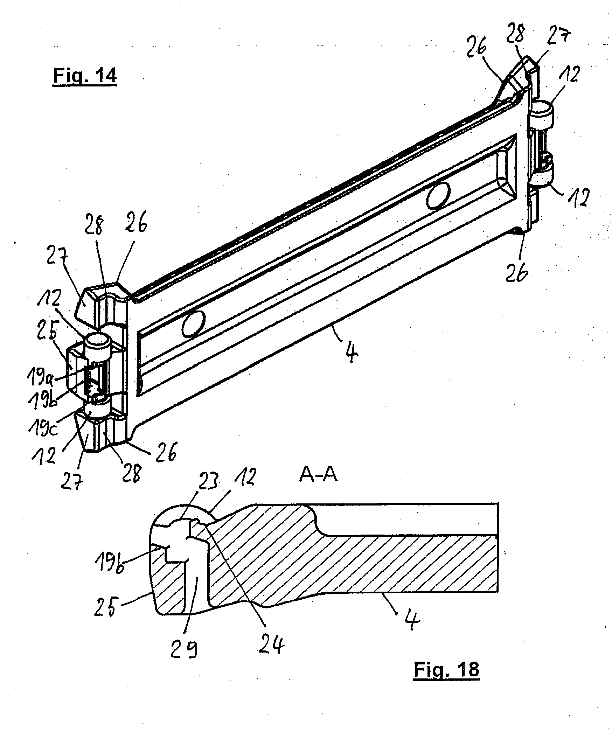

Die zwischen den gegenüberliegenden Innenlaschen und Außenlaschen angeordneten Querstege 4 sind ebenfalls identisch ausgebildet und in den Figuren 14 - 18 näher illustriert.

Wie aus den zuletzt genannten Figuren 14 - 18 hervorgeht, weisen die Querstege 4 an ihren beiden Enden jeweils einen sich in Längsrichtung des Querstegs 4 erstreckenden Ansatz 11 auf, an dem zwei zu diesem und auf einer gemeinsamen Achse liegende zylindrische Lagerbereiche 12 angeordnet sind.

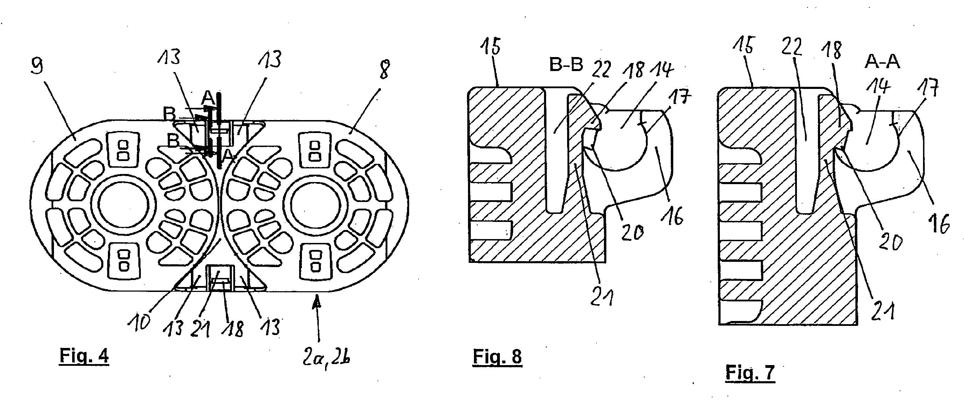

Die Lagerbereiche 12 sind so ausgelegt, dass sie in dazu korrespondierende Lageraufnahmen 13 an den Innenseiten der Seitenlaschen 1a, 1b, 2a, 2b, 3a, 3b einsetzbar sind. Die Lageraufnahmen 13 sind für die Außenlaschen der Figur 5 und insbesondere den Figuren 7 und 8 entnehmen. Wie Figur 12 im Vergleich zu Figur 5 erkennen lässt, sind die Lageraufnahmen 13 der Innenlaschen zu denjenigen der Außenlaschen gleich ausgebildet.

Wie aus den Figuren 5 und 12 in Verbindung mit den Figuren 7 und 8 hervorgeht, sind die Lageraufnahmen 13 taschenförmig mit einer teilzylindrischen Öffnung 14 ausgebildet, deren Radius etwa dem Radius der Lagerbereiche 12 des Querstegs entspricht und die zur oberen Schmalseite 15 der Seitenlaschen 1a, 1b, 2a, 2b, 3a, 3b und an den aufeinander zuweisenden Stirnseiten offen sind. Die Öffnung 14 ist an der zum Quersteg hinweisenden Wand 16 mit einem Hinterschnitt 17 versehen, in die die Lagerbereiche 12 beim Schließen des Querstegs 4 einrastbar sind.

Die taschenförmigen Lageraufnahmen 13 stehen an der zum Ketteninneren weisenden Seite der Seitenlaschen 1a, 1b, 2a, 2b, 3a, 3b vor.

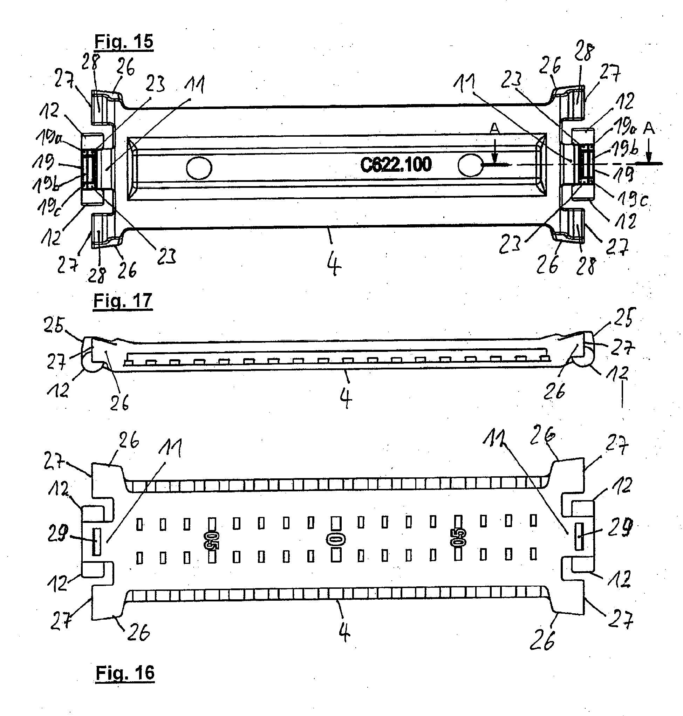

Zur weiteren Befestigung des Querstegs 4 an den Seitenlaschen 1a, 1b, 2a, 2b, 3a, 3b weisen diese im Bereich ihrer oberen Schmalseite 15 und ihrer unteren Schmalseite eine Schnappeinrichtung mit einer Schnappnase 18 auf, die ebenfalls genauer in den Figuren 7 und 8 dargestellt ist. Die Schnappnase18 wirkt mit einer an dem betreffenden Ende des Querstegs 4 angeordneten Rastleiste 19 (siehe insbesondere Figuren 15, 18 und 19) zusammen, so dass in der Rastposition des Querstegs 4 die Schnappnase 18 die Rastleiste 19 übergreift.

Wie insbesondere den Figuren 14 und 15 entnommen werden kann, ist die Rastleiste 19 zwischen den Lagerbereichen 12 des Querstegs 4 angeordnet. Entsprechend ist die Schnappeinrichtung mit der Schnappnase 18 zwischen den Lageraufnahmen 13 der Seitenlaschen 1a, 1b, 2a, 2b, 3a, 3b angeordnet, wie insbesondere in den Figuren 5 und 12 gezeigt ist.

Wie aus den Figuren 14, 15 hervorgeht, sind die in Längsrichtung der Seitenlaschen liegenden Endbereiche der Rastleiste 19 an den aufeinander zuweisenden Stirnseiten der Lagerbereiche 12 angeformt. Aus Figur 14 ist ersichtlich, dass die Rastleiste 19 in Bezug auf die zur Querstegsebene senkrechte, sich vom Ketteninnenraum auswärts erstreckende Höhe der Lagerbereiche 12 tieferliegend angeordnet ist. Die Rastleiste 19 weist drei im Wesentlichen ebene Flächen 19a, 19b, 19c auf, an denen die Schnappnase 18 der Schnappeinrichtung der Seitenlaschen 1a, 1b, 2a, 2b, 3a, 3b in der Rastposition des Querstegs 4 anliegt. Wie Figur 14 zeigt, grenzen die Flächen 19a und 19c an die gegenüberliegenden Stirnseiten der Lagerbereiche 12 an. Im mittleren Bereich zwischen diesen Flächen 19a und 19c weist die Rastleiste 19 eine tiefergelegene Fläche 19b auf.

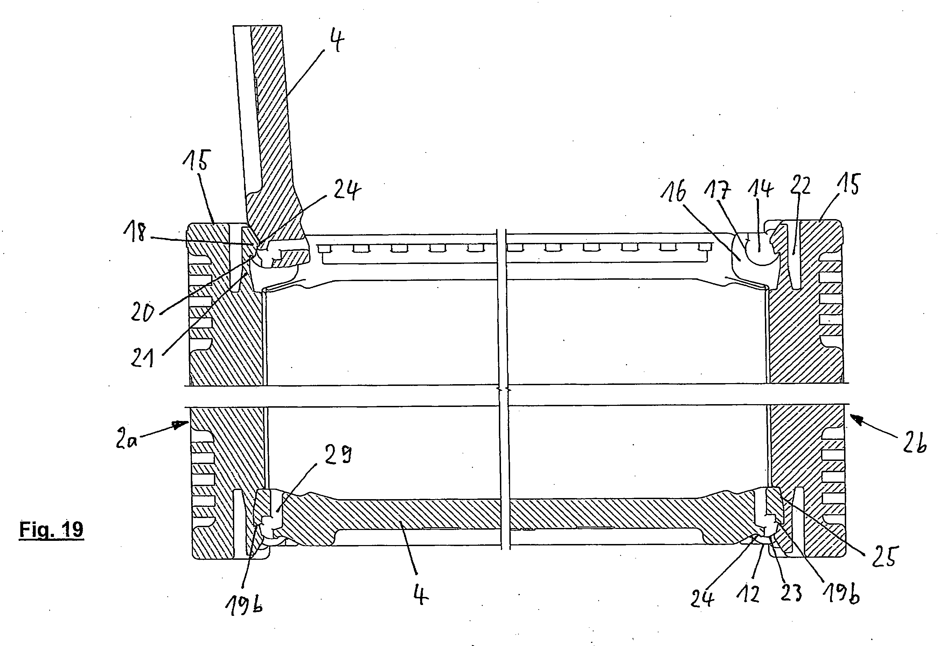

Entsprechend liegt in der Rastposition des Querstegs 4 die Schnappnase 18 der Schnappeinrichtung, wie aus Figur 19 hervorgeht, an den beiden äußeren Flächen 19a und 19c an. In ihrem mittleren, über der tieferliegenden Fläche 19b liegenden Bereich weist die Rastnase, wie aus den Figuren 7 und 8 ersichtlich, einen tiefergezogenen Vorsprung 20 auf, der in der Rastposition des Querstegs 4 an der tieferliegenden Fläche 19b der Rastleiste 19 anliegt. Somit wirkt die Schnappnase 18 über ihre gesamte Erstreckung in Längsrichtung der Seitenlaschen 1a, 1b, 2a, 2b, 3a, 3b mit der Rastleiste 19 zusammen.

Der tieferliegende Bereich der Rastleiste 19 ermöglicht es, mit einem geeigneten Werkzeug, z.B. einem Schraubenzieher, von der Seite des Querstegs her gegen die Schnappnase 18 zu drücken, um die Rastleiste 19 des Querstegs 4 aus der Rastposition mit der Schnappnase 18 zu lösen.

Wie insbesondere aus den Figuren 7, 8 und 19 hervorgeht, ist die Schnappeinrichtung der Seitenlaschen 1a, 1b, 2a, 2b, 3a, 3b als ein elastisch biegsamer Schnapphaken 21 ausgebildet, der an dem Boden einer zur Schmalseite 15 und zum Ketteninneren hin offenen Ausnehmung 22 angeordnet ist.

Wie weiterhin insbesondere aus den Figuren 14, 15 und 18 hervorgeht, schließt sich an das zum Quersteg 4 gerichtete Ende der äußeren Flächen 19a und 19c der Rastleiste 19 ein um die gemeinsame Achse der Lagerbereiche 12 teilzylindrisch gekrümmter Bereich 23 an, der mit dem Ansatz 11 des Querstegs 4 verbunden ist. Der teilzylindrische Bereich 23 ist konzentrisch zur gemeinsamen Achse der Lagerbereiche 12 angeordnet. Er bildet eine Verstärkung des Übergangs zwischen der Rastleiste 19 und dem Ansatz 11. Beim Verschwenken des Querstegs 4 um die gemeinsame Achse der Lagerbereiche 12 wird durch die teilzylindrische Ausbildung der Bereiche 23 ein Kontakt mit der Schnappnase 18 der Schnapphaken 21 vermieden.

Zwischen den teilzylindrischen Bereichen 23 ist ein Durchbruch 29 vorgesehen, wie er insbesondere Figur 18 entnommen werden kann. An dem zum Quersteg 4 weisenden Rand des Durchbruchs im Bereich der teilzylindrischen Bereiche 23 ist eine sich in Längsrichtung der Seitenlasche erstreckende Nut 24 vorgesehen, in die die Schnappnase 18 des Schnapphakens 21 beim vollständigen Öffnen des Querstegs 4 zur Arretierung des Querstegs 4 in dieser Position einrastet, wie in Figur 19 gezeigt ist.

Die zur Seitenlasche 1a, 1b, 2a, 2b, 3a und 3b hinweisende Seite der Rastleiste 19 weist, wie insbesondere den Figuren 14 und 18 zu entnehmen ist, eine zum Ketteninneren hin verlaufende Gleitschräge 25 auf, die mit der Schnappnase 18 derart zusammenwirkt, dass diese beim Einsetzen der Lagerbereiche 12 des Querstegs 4 in die Lageraufnahmen 13 - bei im Wesentlichen senkrechter Positionierung des Querstegs zur Seitenlasche - in der Seitenlasche nach außen hin gedrückt wird. Die Gleitschräge 25 liegt in der Rastposition des Querstegs 4 an der Innenseite des Schnapphakens 21 unterhalb der Rastnase 18 und des tiefergezogenen Vorsprungs 20 an.

Wie den Figuren 14 - 17 zu entnehmen ist, weisen die Enden des Querstegs 4 in axialer Richtung außerhalb der Lagerbereiche 12 sich in Längsrichtung des Querstegs 4 erstreckende Vorsprünge 26 auf, die mit einer Anlagefläche 27 an der zum Ketteninneren weisenden Seite der Innenlaschen anliegen. Die Vorsprünge 26 sind in Form flügelartiger Verbreiterungen ausgebildet, die derart bemessen sind, dass die am Mittelbereich 10 einer Außenlasche befestigten Querstege 4 mit den flügelartigen Vorsprüngen 26 Randbereiche der benachbarten Innenlaschen überlappen und gegen die Außenlasche festlegen. Bei dieser Konstruktion kann auf die zwischen den gegenüberliegenden Innenlaschen angeordneten Querstege, wie sie in Figur 1 gezeigt sind, verzichtet werden.

Die Vorsprünge 26 weisen in ihren Endbereichen eine zum Ketteninneren hin gerichtete Kröpfung 28 auf, so dass beim Verschwenken des Querstegs 4 in die in Figur 19 gezeigte voll geöffnete Position der ins Ketteninnere weisende Rand der Seitenlaschen 1a, 1b, 2a, 2b, 3a, 3b in die nach innen gekröpften Endbereiche der Ansätze 11 des Querstegs 4 eingereift. Die innenseitig zur Kröpfung 28 liegende Seite der Vorsprünge 26 ist als Anschlagfläche gegen eine gegenüberliegende Anschlagfläche der Seitenlasche 1a, 1b, 2a, 2b, 3a, 3b zur Begrenzung des Verschwenkwinkels des Querstegs 4 ausgebildet.

### Bezugzeichenliste

- 1: Kettenglied
- 1a: Seitenlasche
- 1b: Seitenlasche
- 1c: Kettenglied
- 2a: Seitenlasche
- 2b: Kettenglied
- 3a: Seitenlasche
- 4: Quersteg
- 5: Mittelbereich
- 6: Gelenkbereich
- 7: Gelenkbereich
- 8: Gelenkbereich
- 9: Gelenkbereich
- 10: Mittelbereich
- 11: Ansatz
- 12: Lagerbereich
- 13: Lageraufnahme
- 14: Öffnung
- 15: obere Schmalseite
- 16: Wand
- 17: Hinterschneidung
- 18: Schnappnase
- 19: Rastleiste
- 19a: Fläche
- 19b: Fläche
- 19c: Fläche
- 20: Vorsprung
- 21: Schnapphaken
- 22: Ausnehmung
- 23: Bereich
- 24: Nut
- 25: Gleitschräge
- 26: Vorsprung
- 27: Anlagefläche
- 28: Kröpfung
- 29: Durchbruch

## Patentansprüche

1. Energieführungskette zur Führung von Kabeln, Schläuchen oder dergleichen von einer ersten Anschlußstelle zu einer zweiten Anschlußstelle, wobei mindestens eine der beiden Anschlußstellen ortsveränderlich ist, bestehend aus einer Vielzahl gelenkig miteinander verbundener bzw. verbindbarer Kettenglieder (1, 2, 3) aus Kunststoff, die jeweils zwei Seitenlaschen (1a, 1b, 2a, 2b, 3a, 3b) aufweisen, wobei die Seitenlaschen quer zu ihrer Längsrichtung gegenüberliegende Laschenstränge bilden und mindestens einige der gegenüberliegenden Seitenlaschen durch obere und untere Querstege (4) miteinander verbunden sind, wobei wenigstens einige der Querstege (4) an mindestens einem ihrer Enden einen in Längsrichtung des Querstegs (4) erstreckenden Ansatz (11) aufweisen, an dem zwei zu diesen auf einer gemeinsamen Achse liegende zylindrische Lagerbereiche (12) angeordnet sind, die jeweils in eine an der zu dem genannten Ende des Querstegs (4) weisenden Seitenlasche angeordnete taschenförmige Lageraufnahme (13) einsetzbar sind, und die Seitenlasche eine Schnappeinrichtung mit einer Schnappnase (18) aufweist, die mit einer an dem genannten Ende des Querstegs (4) angeordneten Rastleiste (19) zusammenwirkt, so dass in einer Rastposition die Schnappnase (18) die Rastleiste (19) übergreift, wobei die Rastleiste (19) radial außerhalb der gemeinsamen Achse der Lagerbereiche (12) vom Quersteg (4) wegweisend angeordnet ist und die Schnappeinrichtung in der Rastposition an der vom Quersteg wegweisenden Seite der Rastleiste (19) angeordnet ist, so dass beim Verschwenken des Querstegs (4)um die gemeinsame Achse der in die Lageraufnahmen (13) eingesetzten Lagerbereiche (12) bis in eine vollständig geöffnete Position des Querstegs (4) die Rastleiste (19) unterhalb der Schnappnase (18) hinweg bewegbar ist, wobei sowohl die oberen als auch die unteren Querstege (4) den Ansatz (11) und den Lagerbereichen (12) und der Rastleiste (19) und die Seitenlaschen (1a, 1b, 2a, 2b, 3a, 3b) die Lagerbereiche (12) aufnehmende Lageraufnahmen (13) und Schnappeinrichtungen aufweisen, **dadurch gekennzeichnet, dass** die Lageraufnahmen (13) an den zum Ketteninneren weisenden Seiten der Seitenlaschen (1a, 1b, 2a, 2b, 3a, 3b) vorstehen und die Querstege an ihren beiden Enden in axialer Richtung außerhalb der Lagerbereiche (12) jeweils einen sich in Längsrichtung des Querstegs (4) erstreckenden Vorsprung (26) aufweisen, der mit einer Anlagefläche (27) an der zum Ketteninneren weisenden Seite einer Seitenlasche (1a, 1b, 2a, 2b, 3a, 3b) in der Rastposition anliegt.

2. Energieführungskette nach Anspruch 1, **dadurch gekennzeichnet, dass** die Rastleiste (19) zwischen den Lagerbereichen (12) des Querstegs (4) angeordnet ist.

3. Energieführungskette nach Anspruch 1 oder 2, **dadurch gekennzeichnet, dass** die in Längsrichtung der Energieführungskette liegenden Endbereiche der Rastleiste (19) an den aufeinander zu weisenden Stirnseiten der Lagerbereiche (12) angeformt sind.

4. Energieführungskette nach einem der Ansprüche 1 bis 3, **dadurch gekennzeichnet, dass** die Rastleiste (19) in Bezug auf die zur Querstegsebene senkrechte sich zum Ketteninnenraum auswärts erstreckenden Höhe der Lagerbereiche (12) tieferliegend angeordnet ist.

5. Energieführungskette nach einem der Ansprüche 1 bis 4, **dadurch gekennzeichnet, dass** die Rastleiste sich in vom Quersteg (4) wegweisender Richtung bis zum Umfang der Lagerbereiche (12) erstreckt.

6. Energieführungskette nach einem der Ansprüche 1 bis 5, **dadurc gekennzeichnet**, dass sich an das zum Quersteg (4) gerichtete Ende der Rastleiste (19) ein um die gemeinsame Achse der Lagerbereiche (12) konvex gekrümmter Bereich (23) anschließt.

7. Energieführungskette nach Anspruch 6, **dadurch gekennzeichnet, dass** der konvex gekrümmte Bereich (23) mit einer sich in Längsrichtung der Energieführungskette erstreckenden Nut (24) versehen ist, in die die Schnappnase (18) beim vollständigen Öffnen des Querstegs (4) zur Arretierung des Querstegs (4) in der vollständig geöffneten Position einrastbar ist.

8. Energieführungskette nach einem der Ansprüche 1 bis 7, **dadurch gekennzeichnet, dass** die Rastleiste (19) einen gegenüber ihren in Kettenlängsrichtung liegenden äußeren Bereichen tiefergelegenden mittleren Bereich aufweist.

9. Energieführungskette nach Anspruch 8, **dadurch gekennzeichnet, dass** die Schnappnase (18) in ihrem mittleren, über dem tieferliegenden Bereich der Rastleiste (19) liegenden Bereich einen tiefergezogenen Vorsprung (20) aufweist, der in der Rastposition des Querstegs (4) an dem tieferliegenden Bereich der Rastleiste (19) anliegt.

10. Energieführungskette nach einem der Ansprüche 1 bis 9, **dadurch gekennzeichnet, dass** die Rastleiste (19) eine oder mehrere ebene Flächen (19a, 19b, 19c) aufweist, an denen die Schnappnase (18) in der Rastposition anliegt.

11. Energieführungskette nach einem der Ansprüche 1 bis 10, **dadurch gekennzeichnet, dass** die zur Seitenlasche (1a, 1b, 2a, 2b, 3a, 3b) hinweisende Seite der Rastleiste (19) mit einer zum Ketteninneren hin verlaufenden Gleitschräge (25) versehen ist, die mit der Schnappnase (18) derart zusammenwirkt, dass diese beim Einsetzen der Lagerbereiche (12) des Querstegs (4) in die Lageraufnahmen (13) - bei im Wesentlichen senkrechter Positionierung des Querstegs (4) zur Seitenlasche - nach außen bewegbar ist.

12. Energieführungskette nach einem der Ansprüche 1 bis 11, **dadurch gekennzeichnet, dass** die Schnappeinrichtung der Seitenlasche (1a, 1b, 2a, 2b, 3a, 3b) als elastisch biegsamer Schnapphaken (21) ausgebildet ist, der in einer zur benachbarten Schmalseite (15) der Seitenlasche (1a, 1b, 2a, 2b, 3a, 3b) und zum Ketteninneren offenen Ausnehmung (22) angeordnet ist.

13. Energieführungskette nach Ansprüche 1 bis 12, **da- durch gekennzeichnet**, dass die Lageraufnahmen (13) taschenförmig mit einer teilzylindrischen Öffnung (14) ausgebildet sind, deren Radius im Wesentlichen dem Radius der Lagerbereiche (12), des Querstegs (4) entspricht und die zur Außenseite des Querstegs (4) und an ihren aufeinander zu weisenden Stirnseiten offen sind.

14. Energieführungskette nach Anspruch 13, **dadurch gekennzeichnet, dass** die teilzylindrische Öffnung (14)an der zum Quersteg (4) weisenden Wand (16) der taschenförmigen Lageraufnahme (13) eine Hinterschneidung (17) aufweist, in die die Lagerbereiche (12) beim Schließen des Querstegs (4) einrastbar sind.

15. Energieführungskette nach einem der Ansprüche 1 bis 14, **dadurch gekennzeichnet, dass** ihre Laschenstränge aus sich abwechselnden Innen- und Außenlaschen bestehen, wobei sich jeweils Innenlaschen und Außenlaschen in Querrichtung der Energieführungskette gegenüberliegen, die Innen- und Außenlaschen sich mit Gelenkbereichen (6, 7, 8, 9) jeweils überlappen und die sich an beiden Seiten der Lagerbereiche (12) erstreckenden Vorsprünge (26) des an einer Außenlasche befestigbaren Querstegs (4) so angeordnet und ausgebildet sind, dass sie mit ihren Anlageflächen (27) zumindest teilweise an die Gelenkbereiche (6, 7) der benachbarten Innenlaschen anlegbar sind.

16. Energieführungskette nach einem der Ansprüche 1 bis 15 17, **dadurch gekennzeichnet, dass** die sich an beiden Seiten der Lagerbereiche (12) erstreckenden Vorsprünge (26) Verbreiterungen in Längsrichtung der Energieführungskette aufweisen, längs derer sich die Anlageflächen (27) erstrecken.

## Claims

1. Energy guiding chain for guiding cables, flexible tubes or the like from a first connection point to a second connection point, at least one of these two connection points being non-stationary, wherein said energy guiding chain comprises a plurality of synthetic chain links (1, 2, 3) which are or can be articulated to each other and which each include two lateral straps (1a, 1b, 2a, 2b, 3a, 3b), wherein the lateral straps form mutually opposing strap strands transversely to their longitudinal direction and at least some of said opposing lateral straps are connected to each other by upper and lower cross-members (4), at least some of the cross-members (4) including a lug (11) on at least one end thereof which extends in the longitudinal direction of the cross-member (4) and on which two cylindrical bearing parts (12) are arranged on a common axis therewith, each of the bearing parts being insertable in a pocket-like bearing receiver (13) which is arranged on the lateral strap that points towards the said end of the cross-member, and the lateral strap including a snap-action device having a snap tab (18) that cooperates with a locking bar (19) disposed on the said end of the cross-member (4) such that in a locking position, said snap tab (18) will overlap said locking bar (19), wherein the locking bar (19) is arranged radially outside of the common axis of the bearing parts (12) such as to point away from the cross-member (4), and wherein in the locking position, said snap-action device is disposed on the side of the locking bar (19) that points away from the cross-member such that when the cross-member (4) is pivoted about the common axis of the bearing parts (12) inserted in the bearing receivers (13) to a fully opened position of the cross-member (4), said locking bar (19)can be passed through under the snap tab (18), wherein both the upper and the lower cross-members (4) are provided with the lug (11), the bearing parts (12) and the locking bar (19) on both ends thereof, the lateral straps (1a, 1b, 2a, 2b, 3a, 3b) include the bearing receivers (13) accommodating the bearing parts (12), and the snap-action devices, ***characterized in* that** the bearing receivers (13) protrude on the sides of the lateral straps (1a, 1b, 2a, 2b, 3a, 3b) pointing towards the interior of the chain, and that in the axial direction outside of the bearing parts (12) the cross-members respectively include a projection (26) on both ends thereof which extends in the longitudinal direction of the cross-member (4) and rests with a contact surface thereof against the side of a lateral strap (1a, 1b, 2a, 2b, 3a, 3b) which points towards the interior of the chain, in the locking position.

2. Energy guiding chain according to claim 1, ***characterized in* that** the locking bar (19) is arranged between the bearing parts (12) of the cross-member (4).

3. Energy guiding chain according to claim 1 or 2, ***characterized in* that** the end regions of the locking bar (19) which are situated in the longitudinal direction of the energy guiding chain are molded to the mutually facing front sides of the bearing parts (12).

4. Energy guiding chain according to one of the claims 1 to 3, ***characterized in* that** the locking bar (19) is arranged to be lower-lying in relation to the height of the bearing parts (12) which is vertical to the plane of the cross-member and extends outwards from the interior of the chain.

5. Energy guiding chain according to one of the claims 1 to 4, ***characterized in* that** the locking bar (19) extends in a direction away from the cross-member (4) up to the circumference of the bearing parts (12).

6. Energy guiding chain according to one of the claims 1 to 5, ***characterized in* that** the end of the locking bar (19) which is directed towards the cross-member (4) is joined by a region (23) which is convexly curved about the common axis of the bearing parts (12).

7. Energy guiding chain according to claim 6, ***characterized in* that** the convexly curved region (23) is provided with a groove (24) which extends in the longitudinal direction of the energy guiding chain and in which the snap tab (18) can be engaged when the cross-member (4) is fully opened, for locking the cross-member (4) in the fully opened position.

8. Energy guiding chain according to one of the claims 1 to 7, ***characterized in* that** the locking bar (19) includes a central part which is lower lying in relation to its outer parts which are situated in the longitudinal direction of the chain.

9. Energy guiding chain according to claim 8, ***characterized in* that** in its central part above the lower-lying part of the locking bar, the snap tab (18) includes a more deeply extended projection (20) which in the locking position of the cross-member (4) rests against said lower-lying part of the locking bar (19).

10. Energy guiding chain according to one of the claims 1 to 9, ***characterized in* that** the locking bar (19) includes one or more plane surfaces (19a, 19b, 19c) where the snap tab (18) rests against in the locking position.

11. Energy guiding chain according to one of the claims 1 to 10, ***characterized in* that** the side of the locking bar (19) which points towards the lateral strap (1a, 1b, 2a, 2b, 3a, 3b) is provided with a sliding ramp (25) which extends towards the interior of the chain and which cooperates with the snap tab (18) in such a manner that when the bearing parts (12) of the cross-member (14) are inserted in the bearing receivers (13) - with the cross-member (4) being positioned substantially vertically to the lateral strap - said snap tab is movable outwards.

12. Energy guiding chain according to one of the claims 1 to 11, ***characterized in* that** the snap-action device of the lateral lug (1, 1b, 2a, 2b, 3a, 3b) is designed as an elastically flexible snap hook (21) which is arranged in a recess (22) which is open towards the adjacent narrow side (15) of the lateral strap (1, 1b, 2a, 2b, 3a, 3b) and towards the interior of the chain.

13. Energy guiding chain according to one of the claims 1 to 12, ***characterized in* that** the bearing receivers (13) are designed in a pocket-like fashion with a partly cylindrical opening (14), the radius thereof substantially corresponds to the radius of the bearing parts (12) of the cross-member (4), and which are open towards the outside of the cross-member (4) and at their mutually facing front sides.

14. Energy guiding chain according to claim 13, ***characterized in* that** on the wall (16) of the pocket-like bearing receiver (13) facing towards the cross-member (4), said partly cylindrical opening (14) includes an undercut (17) in which the bearing parts (12) can be engaged when the cross-member (4) is closed.

15. Energy guiding chain according to one of the claims 1 to 14, ***characterized in* that** the strap strands thereof consist of alternating inner and outer straps, wherein said inner and outer straps are respectively opposed to each other in the transverse direction of the energy guiding chain, wherein the inner and outer straps respectively overlap with joint areas (6, 7, 8, 9) and wherein the projections (26) of a cross-member (4) that can be fixed to an outer strap and extend on both sides of the bearing parts (12) are arranged and designed in such a manner that they can be applied with their contact surfaces (27) against the joint areas (6, 7) of the adjacent inner straps, at least partly.

16. Energy guiding chain according to one of the claims 1 to 15, ***characterized in* that** the projections (26) which extend on both sides of the bearing parts (12) include expansions in the longitudinal direction of the energy guiding chain, with the contact surfaces (27) extending along said expansions.

## Revendications

1. Chaîne d'acheminement d'énergie servant au guidage de câbles, tuyaux flexibles ou similaires d'un premier point de raccordement vers un deuxième point de raccordement, l'un au moins des deux points de raccordement étant mobile, composée d'une pluralité de maillons (1, 2, 3) en matière plastique reliés ou apte à être reliés les uns aux autres de manière articulée qui comportent chacun deux éclisses latérales (1a, 1 b, 2a, 2b, 3a, 3b) formant transversalement par rapport à leur direction longitudinal des tronçons d'éclisses opposés et au moins certaines des éclisses latérales opposées étant reliées par des traverses (4) supérieure et inférieure, certaines au moins des traverses (4) présentant, au moins à l'une de ses extrémités, un appendice (11) s'étendant dans la direction longitudinale de la traverse (4) et comportant deux parties palier cylindriques (12) situés sur un axe commun par rapport à celles-ci qui peuvent être installées dans des logements de palier (13) en forme de poche agencés sur l'éclisse latérale orientée vers l'extrémité de la traverse concernée, et l'éclisse latérale comportant un dispositif à déclic muni d'un taquet à déclic (18) qui coopère avec une barrette d'encliquetage (19) agencée à l'extrémité de la traverse (4) concernée de sorte que dans une position d'encliquetage ledit taquet à déclic débord sur la barrette d'encliquetage (19), la barrette d'encliquetage (19) étant disposée radialement à l'extérieur de l'axe commun des parties palier cylindriques (12) de sorte à être détournée de la traverse (4) et le dispositif à déclic dans la position d'encliquetage étant dispose sur le côté de la barrette d'encliquetage (19) détourné de la traverse de sorte que, lors du pivotement de la traverse (4) autour l'axe commun des parties palier cylindriques (12) installées dans les logements de palier (13) jusqu'à une position complètement ouverte de la traverse (4), la barrette d'encliquetage peut passer au-dessous du taquet à déclic (18), les traverses (4) supérieure et inférieure comportant toutes deux l'appendice (11) et les parties palier cylindriques (12) et la barrette d'encliquetage (19) et les éclisses latérales (1a, 1 b, 2a, 2b 3a, 3b) et les logements de palier (13) recevant les parties palier cylindriques (12) et des dispositifs à déclic, **caractérisée en ce que** les logements de palier (13) dépassent sur les côtés des éclisses latérales (1 a, 1 b, 2a, 2b, 3a, 3b) orientés vers l'intérieur de la chaîne, et les traverses comportent chacune à leurs deux extrémités est dans la direction axiale à l'extérieur des parties palier (12) une partie faisant saillie, qui s'étend dans la direction longitudinale de la traverse (4) et qui repose, en position d'encliquetage, par une surface d'appui (27) sur le côté d'une éclisse latérale (1a, 1 b, 2a, 2b, 3a, 3b) orientée vers l'intérieur de la chaîne.

2. Chaîne d'acheminement d'énergie selon la revendication 1, **caractérisée en ce que** la barrette d'encliquetage (19) est disposée entre les parties de palier (12) de la traverse (4).

3. Chaîne d'acheminement d'énergie selon la revendication 1 ou 2, **caractérisée en ce que** les parties extrêmes de la barrette d'encliquetage (19) se situant dans la direction longitudinale de la chaîne d'acheminement d'énergie sont surmoulées aux faces des parties palier cylindrique (12) orientées l'une vers l'autre.

4. Chaîne d'acheminement d'énergie selon l'une des revendications 1 à 3, **caractérisée en ce que** la barrette d'encliquetage (19) est disposée sur un niveau inférieur par rapport au niveau des parties palier (12) qui est perpendiculaire au plan de la traverse et qui s'étend vers l'extérieur par rapport à l'intérieur de la chaîne.

5. Chaîne d'acheminement d'énergie selon l'une des revendications 1 à 4, **caractérisée en ce que** la barrette d'encliquetage s'étend dans une direction détournée de la traverse (4) et jusqu'au périmètre des parties palier (12).

6. Chaîne d'acheminement d'énergie selon l'une des revendications 1 à 5, **caractérisée en ce que** l'extrémité de la barrette d'encliquetage (19) orientée vers la traverse (4) est suivie d'une partie (23) courbée de manière convexe autour l'axe commun des parties palier (12).

7. Chaîne d'acheminement d'énergie selon la revendication 6, **caractérisée en ce que** la partie (23) courbée de manière convexe est munie d'une rainure (24) qui s'étend dans la direction longitudinale de la chaîne d'acheminement d'énergie, et dans cette rainure peut s'encliqueter le taquet à déclic (18) lors de l'ouverture complète de la traverse (4), pour arrêter la traverse (4) en position de l'ouverture complète.

8. Chaîne d'acheminement d'énergie selon l'une des revendications 1 à 7, **caractérisée en ce que** la barrette d'encliquetage (19) comporte une partie centrale disposée sur un niveau inférieur par rapport à ses parties extérieures se situant dans la direction longitudinale de la chaîne.

9. Chaîne d'acheminement d'énergie selon la revendication 6, **caractérisée en ce qu'**au-dessus de la partie disposée sur un niveau inférieur de la barrette d'encliquetage (19) le taquet à déclic (18) comporte une projecture renfoncée (20) qui en position d'encliquetage de la traverse (4) repose sur la partie de la barrette d'encliquetage (19) disposée sur un niveau inférieur.

10. Chaîne d'acheminement d'énergie selon l'une des revendications 1 à 9, **caractérisée en ce que** la barrette d'encliquetage (19) comporte une ou plusieurs surfaces plaines (19a, 19b, 19c) sur lesquelles repose le taquet à déclic (18) en position d'encliquetage.

11. Chaîne d'acheminement d'énergie selon l'une des revendications 1 à 10, **caractérisée en ce que** le côté de la barrette d'encliquetage (19) orienté vers l'éclisse latérale (1a, 1 b, 2a, 2b, 3a, 3b) est muni d'un rampant de glissement (25) qui coopère avec le taquet à déclic (18) de sorte que le dernier peut mouvoir vers l'extérieur lors de l'installation des parties palier (12) de la traverse (4) dans les logements de palier (13) - à un positionnement de la traverse (4) sensiblement perpendiculaire à l'éclisse latérale.

12. Chaîne d'acheminement d'énergie selon l'une des revendications 1 à 11, **caractérisée en ce que** le dispositif à déclic de l'éclisse latérale (1a, 1 b, 2a, 2b, 3a, 3b) est configuré comme un crochet d'encliquetage (21) flexible de manière élastique qui est disposé dans un creux (22) ouvert vers le côté étroit adjacent (15) de l'éclisse latérale (1 a, 1 b, 2a, 2b, 3a, 3b) et vers l'intérieur de la chaîne.

13. Chaîne d'acheminement d'énergie selon l'une des revendications 1 à 12, **caractérisée en ce que** les logements de palier (13) sont en forme de poche avec une ouverture en forme de cylindre primitif de référence dont le radius sensiblement correspond au radius des parties palier (12) de la traverse (4), et sont ouverts vers l'extérieur de la traverse (4) et à ses fronts orientés l'un vers l'autre.

14. Chaîne d'acheminement d'énergie selon la revendication 6, **caractérisée en ce que** l'ouverture (14) en forme de cylindre primitif de référence comporte, sur la paroi (16) du logement de palier (13) en forme de poche tournée vers la traverse (4), une contre-dépouille (17) dans laquelle peuvent s'encliqueter les parties palier (12) lors de la fermeture de la traverse (4).

15. Chaîne d'acheminement d'énergie selon l'une des revendications 1 à 14, **caractérisée en ce que** ses tronçons d'éclisses sont composés des éclisses intérieures et extérieures alternantes, des éclisses intérieures étant opposées à des éclisses extérieures dans la direction transversale de la chaîne d'acheminement d'énergie, les éclisses intérieures et extérieures respectivement chevauchant des parties de joint (6, 7, 8, 9), et les projectures (26) de la traverse (4) fixable à une éclisse extérieure qui s'étendent sur les deux côtés des parties palier (12) étant disposées et configurées de sorte qu'elles peuvent reposer par ses surfaces d'appui (27) sur les parties de joint (6, 7) des éclisses intérieures adjacentes, au moins en partie.

16. Chaîne d'acheminement d'énergie selon l'une des revendications 1 à 15, **caractérisée en ce que** les projectures (26) qui s'étendent sur les deux côtés des parties palier (12) comporte des élargissements dans la direction longitudinale de la chaîne d'acheminement d'énergie, le long de laquelle s'étendent les surfaces d'appui (27).
